Europäisches Patentamt

European Patent Office

Office européen des brevets

(19)

(11) Publication number: **0 126 538**
**A2**

(12) # EUROPEAN PATENT APPLICATION

(21) Application number: **84302448.0**

(22) Date of filing: **10.04.84**

(51) Int. Cl.³: **F 16 F 9/36**

(30) Priority: **16.05.83 US 495033**

(43) Date of publication of application: **28.11.84**
**Bulletin 84/48**

(84) Designated Contracting States: **BE DE FR GB IT NL**

(71) Applicant: **MAREMONT CORPORATION, 200 East Randolph Drive, Chicago, IL 60601 (US)**

(72) Inventor: **Shah, Mahesh N., 190 Gladstone Drive, Glendale Heights Illinois 60137 (US)**
Inventor: **Smeltzer, Paul, 8 North Parkway Drive, Naperville Illinois 60540 (US)**

(74) Representative: **Allen, Oliver John Richard et al, Lloyd Wise, Tregear & Co. Norman House 105-109 Strand, London, WC2R 0AE (GB)**

(54) **Fiber reinforced plastic inner cylinder head for shock absorbers.**

(57) A shock absorber inner cylinder head composed of a highly thermally expandable material reduces fading by shrinking the clearance between the head and piston rod during periods of high operating temperatures. The material is fiber reinforced plastic.

EP 0 126 538 A2

-1-

This invention relates to a shock absorber, and more particularly, to a shock absorber cylinder head. Most particularly, it relates to a fiber reinforced plastic shock absorber inner cylinder head.

In the past, shock absorber inner cylinder heads have been formed of sintered iron, zinc or steel. The porosity of sintered iron has been desirable because air entrapped between the inner cylinder head and the piston affects the damping curve of the shock absorber at the beginning of the shock rebound stroke. Such entrapped air may exit the inner cylinder through the porosities of a sintered iron head.

Also in the past, shock absorbers of all basic types have suffered from fading. Fading is defined as deterioration of shock absorber function during periods of high temperature. A known source of fading is increased escape of fluid from within the shock absorber inner cylinder, through the clearance between the inner cylinder head and piston rod, during the high temperature periods. This escape occurs because at high temperatures, shock absorber fluid viscosity is reduced. The shock absorber fluid flows, and thereby escapes, more readily.

The art has attempted to minimize the increased escape of shock absorber fluid through the piston rod clearances in the inner heads of shock absorbers in mechanical ways. Tolerances have been maintained within a few ten-thousandths of an inch, to closely control the size of the clearances. O-rings have been placed in the clearances. Nevertheless, fade due to escape of fluid through piston rod clearance is a significant problem

-2-

and drawback of shock absorbers. Increased machining, assembly and resultant cost, decreased reliability, service life and the like are the drawbacks of known solutions.

A shock absorber with a fiber reinforced plastic (FRP) inner cylinder head is substantially without fading. The thermal coefficient of expansion of the FRP head substantially exceeds the thermal expansion coefficients of the inner cylinder and piston rod. The relative rigidity of the inner cylinder wall during a temperature rise restricts radially outward expansion of the FRP head. The FRP head is forced to expand radially inwardly. Such expansion narrows the clearance between the FRP head and piston rod, compensating for reduced fluid viscosity to maintain the rate of escape of fluid through the clearance, as opposed to maintaining the size of the clearance. The FRP head well withstands the outwardly restricted expansion required of it, for reliability and long life. Capillary slots on the head perimeter substitute for porosity of the head, to provide for the escape of entrapped air.

Thus, in a principal aspect, the present invention is an improvement in a shock absorber having a piston rod, an inner cylinder with a cylinder wall having a thermal coefficient of cylinder expansion, and a shock absorber fluid having a viscosity which decreases with increasing temperature.

The improvement is an inner cylinder head defining a bore and clearance for the piston rod. The piston rod is located through the bore. The inner head is located on the cylinder wall. The inner head is formed of a material having a thermal coefficient of expansion substantially greater than the thermal coefficient of expansion of the inner cylinder wall.

Other objects, advantages and features of the invention will be understood from the description of the preferred embodiment, which follows.

The preferred cylinder head of the invention will be described with reference to the accompanying drawing. The drawing consists of five figures, or FIGS., as follows:

FIG. 1 is an elevation view of a shock absorber, with the upper portion cross-sectioned to reveal the preferred cylinder head, also cross-- sectioned, in <u>situ</u>;

FIG. 2 is a plan view of the preferred cylinder head alone;

FIG. 3 is an elevation view of the preferred cylinder head alone;

FIG. 4 is a bottom view of the preferred cylinder head; and

FIG. 5 is a cross-section view of the preferred cylinder head taken along line 5-5 of FIG. 2.

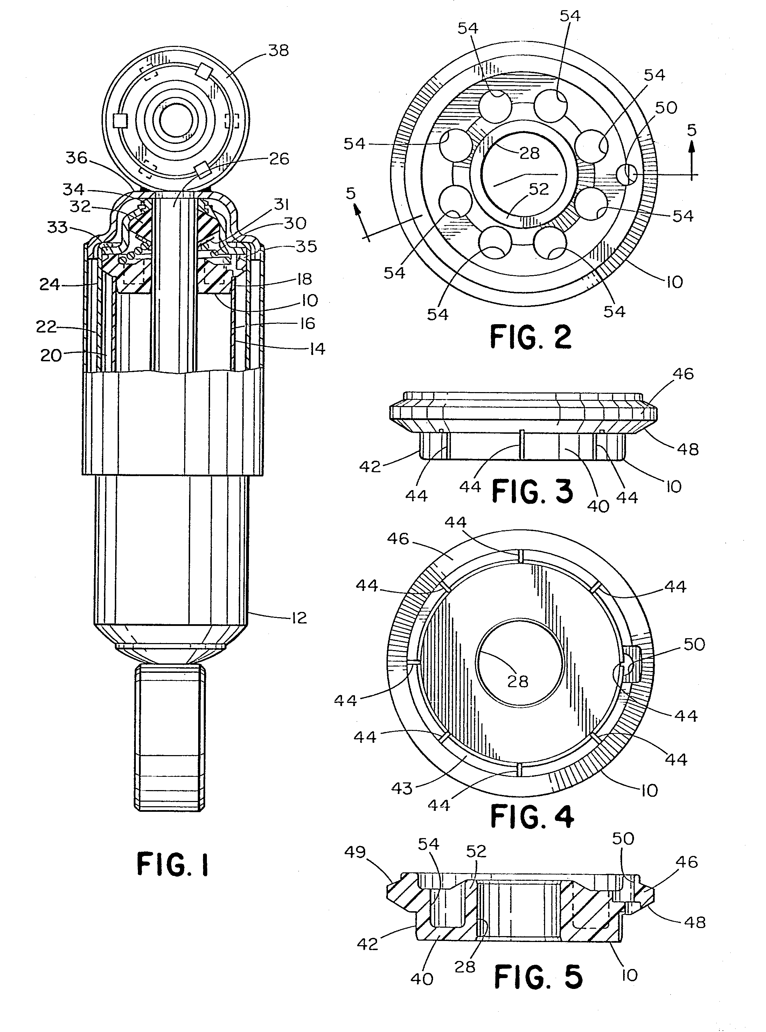

In this brief description and the detailed description which follows, directional terms such as "top," "bottom," "left," and "right" are employed. The terms are employed for the convenience of the reader, and refer to the preferred shock absorber in the positions in which typically used, and as shown in FIGS. 1 and 3.

Referring to FIG. 1, the preferred embodiment of the invention is an improved inner cylinder head 10 in a shock absorber assembly 12.

With the assembly 12, a shock absorber inner cylinder 14 includes a cylindrical wall 16 extending from a head portion 18 to an opposed, base portion (not shown). As conventional, a base valve assembly (not shown) is mounted on the inner cylinder base portion for valved flow of a fluid from within the inner cylinder 14 to a reservoir 20 outside the inner cylinder wall 16, and vice versa. The reservoir 20 is defined by the inner cylinder wall 16 and a cylindrical intermediate cylinder 24 encasing the inner cylinder 14.

A piston subassembly (not shown) including piston valving is mounted on a piston rod 26 within the inner cylinder 14. The rod 26 extends through a bore 28 in the inner cylinder head 10, through an overlying cap seal spring 30, a seal retaining washer 31, an intermediate cap seal 32, and an intermediate cap 34, to a dust cover 36 and an upper fitting 38 adapted for vehicular mounting of the shock absorber 12. The intermediate cap surmounts the upper, cap portion of the intermediate cylinder wall 22, while the cap seal 32 seals the piston rod opening of the cap 34. The cap 33, the cylinder 24 and the surface 49 of inner head 10 are mutually sealed by elastomer seal ring 35 to prevent fluid flow or leakage between cylinder 24 and head 10, or to atmosphere past the periphery of cap 33. The underlying, coil cap spring 30 urges the cap seal 32 against the cap 34. The dust cover 36, also called an outer cylinder, protects the piston rod, when exposed from within the intermediate cylinder 22.

Referring to all four FIGS., the inner cylinder head 10 surmounts the head portion 18 of the inner cylinder wall 16, and underlies and supports the cap spring 30. A lower, annular or disk portion 40 fits within the inner cylinder wall head portion 18, with a cylindrical, circumferential surface 42 in contact substantially completely circumferentially with the cylinder wall 16. The portion 40 is thus completely circumferentially and outwardly confined by and within the cylinder wall 16.

The portion 40 substantially seals the inner cylinder wall head portion 18 against fluid leakage, such that the inner cylinder is pressurized during motion of the piston. Capillary grooves 44 are circumferentially spaced about the portion 40, in the surface 42 and 43. These grooves 44 do not significantly compromise the sealing pressure containing function of the portion 40. They do, however, provide passages for the escape of entrapped air from within the inner cylinder 14 past the head 10. Being spaced completely circumferentially about the head 10, the grooves 44 provide for the escape of air entrapped in the vertical or any angled mounting position of the shock absorber 12. Air escapes through the grooves 44 to the reservoir 20.

Atop the portion 40, a circular flange portion 46 of the head 10 extends outward of the portion 40 to a distance of contact with the intermediate cylinder 24. The lower surface 48 of the portion 46 defines the top of the reservoir 20. A drain hole 50 extends through the flange portion 46. Any shock absorber fluid leaking into the area of the seal 32 and spring 30 is permitted to drain through the hole 50 to the reservoir 20. The head 10 thereby provides against pressurization of the area of the seal and spring 30, 32 above the head 10.

A piston rod seal portion 52 of the head 10 lies centrally within the flange portion 46 and disk portion 40. The seal portion 52 defines the bore 28 with a clearance for the piston rod 26. The seal portion 52 is annular along the piston rod 26, with an internal, cylindrical seal surface 28.

The head 10 is molded in a single step to include all portions 40, 46, 52 composed of a single material. For strength and the molding advantages of material savings and substantial uniformity of thickness, a plurality of recesses 54 surround the seal portion 52 of the head 10, in the flange portion 46.

The head 10 is preferably molded of fiber reinforced plastic such as long fiber, glass filled nylon 6. The cylinder wall 16 is preferably steel. With these materials, or such others as may be substituted, the thermal coefficient of expansion of the material of the head 10 is substantially greater than that of the cylinder wall 16. During periods of high shock absorber operating temperatures, and relative to the head 10, the cylinder wall 16 remains substantially thermally unaffected, or rigid. Thus, the wall 16 confines the head, and especially the portion 40, against unrestrained outward expansion. So confined, the head 10, and especially the portion 40, expands, in part, inward about the piston rod 26. The clearance about the rod 26 is reduced.

The preferred material of the head 10 is such that the rate of clearance reduction with a head, piston rod and cylinder wall of conventional size for automotive applications, is approximately proportional to the viscosity reduction of the shock absorber fluid, in the range of elevated shock absorber operating temperatures which cause fading. Thus, the clearance shrinkage compensates for fluid viscosity reduction, to substantially reduce and eliminate fading.

Upon a reduction to lower operating temperatures, the head 10 contracts without significant internal damage. The clearance for the rod 26 is restored. The head lasts through a desirably great number of expansion/contraction cycles, and cycles with desirable rapidity in relation to encountered temperature cycles.

The preferred embodiment and the invention are now described in such full, clear, concise and exact terms as to enable a person of skill in the art to make and use the same. To particularly point out and distinctly claim the subject matter regarded as invention, the following claims conclude this specification.

CLAIMS:

1.      A shock absorber cylinder head providing a passage and clearance for a piston rod, and being variable in size dependent upon temperature for varying the size of the clearance dependent upon temperature.

2.      A shock absorber cylinder head as claimed in Claim 1 formed of fibre reinforced plastic.

3.      A shock absorber cylinder head as claimed in Claim 1 or 2 adapted to be mounted on a shock absorber cylinder wall.

4.      A shock absorber having a cylinder head as claimed in any of the preceding claims, the head being expandable in size during temperature increases for shrinking the size of the clearance between the piston rod and head during the temperature increases, and being variable in radial dimension in proportion to cylinder head temperature.

5.      A shock absorber as claimed in Claim 4 wherein the head is contractable during temperature decreases for enlarging the size of the clearance during the temperature decreases.

6.      In a shock absorber having, an inner cylinder with an inner cylinder wall and an inner cylinder coefficient of expansion, and a piston rod, wherein the inner cylinder head defines a bore and clearance for the piston rod, the piston rod being located through the bore and the inner head being located on the wall of the inner cylinder, the inner head being formed of a material having an inner head thermal coefficient of expansion substantially greater than the inner cylinder thermal coefficient of expansion.

7.    A shock absorber as claimed in Claim 6 wherein the inner head expands during periods of increasing temperature at a rate substantially greater than the rate of expansion of the inner cylinder to substantially reduce the clearance between the inner head and piston rod to reduce fading.

8.    A shock absorber assembly as claimed in Claim 7 in which the cylinder head is composed of fibre reinforced plastic.

9.    A shock absorber as claimed in Claim 2 or 8 in which the cylinder head is composed of long fibre glass filled nylon 6.

10.    A shock absorber as claimed in any of the preceding claims in which the cylinder head defines circumferentially spaced capillary slots for air passage from the cylinder.

FIG. 1

FIG. 2

FIG. 3

FIG. 4

FIG. 5